(19) Europäisches Patentamt
European Patent Office
Office européen des brevets

(11) EP 4 050 949 B1

(12) EUROPEAN PATENT SPECIFICATION

(45) Date of publication and mention
of the grant of the patent:
**03.01.2024 Bulletin 2024/01**

(51) International Patent Classification (IPC):
**H04W 68/02** (2009.01)     **H04L 1/00** (2006.01)
**H04W 52/02** (2009.01)

(21) Application number: **20881446.7**

(52) Cooperative Patent Classification (CPC):
**H04W 68/025; H04L 1/0061;** H04W 52/0229;
H04W 76/28

(22) Date of filing: **12.10.2020**

(86) International application number:
**PCT/CN2020/120326**

(87) International publication number:
**WO 2021/082892 (06.05.2021 Gazette 2021/18)**

## (54) METHOD FOR PAGING DETECTION AND INDICATION, DEVICE AND MEDIUM

VERFAHREN ZUR FUNKRUFDETEKTION UND -ANZEIGE, VORRICHTUNG UND MEDIUM

PROCÉDÉ DE DÉTECTION ET D'INDICATION DE RADIOMESSAGERIE, DISPOSITIF ET SUPPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2019 CN 201911038972**

(43) Date of publication of application:
**31.08.2022 Bulletin 2022/35**

(73) Proprietors:
• **CHINA MOBILE COMMUNICATION CO., LTD.
RESEARCH INSTITUTE
Beijing 100053 (CN)**
• **China Mobile Communications Group Co., Ltd
Beijing 100032 (CN)**

(72) Inventors:
• **YANG, Tuo
Beijing 100032 (CN)**
• **WANG, Fei
Beijing 100032 (CN)**
• **HU, Lijie
Beijing 100032 (CN)**

(74) Representative: **J A Kemp LLP
80 Turnmill Street
London EC1M 5QU (GB)**

(56) References cited:
**WO-A1-2017/173158     WO-A1-2018/144873**

WO-A1-2019/193538     CN-A- 109 392 091
CN-A- 110 167 109     CN-A- 110 235 455
CN-A- 110 351 831     GB-A- 2 568 513

• **ERICSSON: "Minor clarifications for paging",
3GPP DRAFT; R2-1817152 MINOR
CLARIFICATIONS FOR PAGING, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG2, no. Spokane,
USA; 20181112 - 20181116 12 November 2018
(2018-11-12), XP051556694, Retrieved from the
Internet:
URL:http://www.3gpp.org/ftp/Meetings%5F3GP
P%5FSYNC/RAN2/Docs/R2%2D1817152%2Ezip
[retrieved on 2018-11-12]**
• **ERICSSON: "Use of truncated UE IDs and other
optimizations in paging DCI", 3GPP DRAFT;
R2-1806804 - USE OF TRUNCATED UE IDS AND
OTHER OPTIMIZATIONS IN PAGING DCI, 3RD
GENERATION PARTNERSHIP PROJECT (3GPP),
MOBILE COMPETENCE CENTRE ; 650, ROUTE
DES LUCIOLES ; F-06921 SOPHIA-A , vol. RAN
WG2, no. Busan, Republic of Korea; 20180521 -
20180525 11 May 2018 (2018-05-11),
XP051464425, Retrieved from the Internet:
URL:http://www.3gpp.org/ftp/tsg%5Fran/WG2%
5FRL2/TSGR2%5F102/Docs [retrieved on
2018-05-11]**

EP 4 050 949 B1

- Anonymous: "3 Generation Partnership Project; Technical Specification Group Radio Access Network; Evolved Universal Terrestrial Radio Access (E-UTRA); User Equipment (UE) procedures in idle mode (Release 15)", 3GPP Standard; Technical Specification; 3GPP TS 36.304, 3rd Generation Partnership Project (3GPP), Mobile Competence Centre ; 650, route des Lucioles ; F-06921 Sophia-Antipolis Cedex ; France, vol. RAN WG2, no. V15.4.0, 25 June 2019 (2019-06-25), pages 1-55, XP051754352, Mobile Competence Centre ; 650, route des Lucioles ; F-06921 Sophia-Antipolis Cedex ; France
- vivo: "Paging in NR", 3GPP Draft; R2-1804579_Paging in NR, 3rd Generation Partnership Project (3GPP), Mobile Competence Centre ; 650, route des Lucioles ; F-06921 Sophia-Antipolis Cedex ; France, vol. RAN WG2, no. Sanya, China; 20180416 - 20180420, 6 April 2018 (2018-04-06), XP051415568, Mobile Competence Centre ; 650, route des Lucioles ; F-06921 Sophia-Antipolis Cedex ; France

**Description**

TECHNICAL FIELD

The present disclosure relates to the technical field of wireless communications, and in particular to a method and device for paging detection and indication, and a medium.

BACKGROUND

In 5G New Radio (NR), a User Equipment (UE) monitors a paging message in a manner of Discontinuous Reception (DRX). The UE monitors a Paging Occasion (PO) in each DRX cycle. A PO is a set of Physical Downlink Control Channel (PDCCH) detection occasions that may include multiple time slots. A Paging-Radio Network Temporary Identity (P-RNTI) is used to scramble the transmission on the PO, indicating the PDCCH of the paging message. A Paging Frame (PF) is a radio frame that may include one or more POs.

The deficiency of the related art is that with the current paging design, the UE would perform invalid detection. Related technologies can be found at least in patent document WO2018/144873A1.

SUMMARY

The present disclosure provides a method and device for paging detection and indication and a medium to solve the problem that with the current paging design, UE would perform invalid detection.

The present disclosure is defined in the appended set of claims.

The present disclosure has the following beneficial effects.

In the technical solutions according to the embodiments of the present disclosure, the DCI carries the paging detection parameter in the first information field, and the first information field and the paging detection parameter are used to indicate whether the UE needs to monitor the PO associated with the DCI or receive the paging message. Therefore, it indicates, through a physical signal or channel, whether a PO or some of UEs in the PO need to monitor a paging PDCCH and/or Physical Downlink Shared Channel (PDSCH), so as to avoid the UE from performing unnecessary detection of the paging PDCCH or PDSCH.

For the UE that needs to monitor the PDCCH at each PO position of the UE per se, at which, however, there actually may be no paging message, after monitoring the PDCCH scrambled by the P-RNTI, the UE no longer needs to monitor the PDSCH to determine whether there is actually a paging message.

For other UEs in one PO in which only one UE needs to be paged, there is no need to monitor the paging PDCCH and the PDSCH scheduled by the PDCCH. Further, if the UEs are in a Radio Resource Control (RRC)_IDLE or RRC_INACTIVE state, a lot of invalid energy consumption on monitoring the paging PDCCH and receiving the paging message PDSCH will be undoubtedly reduced.

BRIEF DESCRIPTION OF THE DRAWINGS

The accompanying drawings described here are used for providing further understanding of the disclosure, and constitute a part of the disclosure. Schematic embodiments of the disclosure and description thereof are used for illustrating the disclosure and not intended to form an improper limit to the disclosure. In the accompanying drawings:

FIG. 1 is an implementation flowchart of a method for indicating paging detection on a network side in an embodiment of the present disclosure.

FIG. 2 is an implementation flowchart of a method for paging detection on a UE side in an embodiment of the present disclosure.

FIG. 3 is a structure diagram of a base station in an embodiment of the present disclosure.

FIG. 4 is a structure diagram of UE in an embodiment of the present disclosure.

DETAILED DESCRIPTION

The inventor notices in the inventing process that:
PF and PO are calculated as follows.

The PF is a system frame that satisfies the following formula:

$$(SFN + PF\_offset) \bmod T = (T \operatorname{div} N)*(UE\_ID \bmod N).$$

i_s is used to indicate the index of the PO and acquired by the following formula:

$$i\_s = floor(UE\_ID/N) \bmod Ns,$$

where T is a DRX cycle of a UE, N is the number of PFs included in T, Ns is the number of POs included in one PF, PF_offset is an offset value for calculating the PF, and UE_ID (UE identity) is equal to 5G-S-TMSI mod 1024. The 5G-S-TMSI is a short format of Global Unique Temporary Identity (GUTI), mainly aiming to improve the transmission efficiency of a wireless signaling process (e.g. a paging and service request process). The structure of the 5G-S-TMSI is <5G-S-TMSI>:=<AMF Set ID><AMF Pointer><5G-TMSI>.

If the UE does not have the 5G-S-TMSI, UE_ID is equal to 0.

In an NR paging design, the UEs with a same UE_ID or different UE_IDs calculate a same PO position, that is, multiple UEs are involved in one PO. After monitoring DCI of a paging PDCCH (of which CRC is scrambled by a P-RNTI), a UE further needs to read a PagingRecordList in a PDSCH scheduled by the PDCCH to determine whether a PagingUE-Identity (UE-ID) in the list matches its own 5G-S-TMSI or full Inactive Radio Network Temporary Identifier (I-RNTI), so as to determine whether it is paged.

The PDCCH scheduling the paging message uses a DCI format 1_0, and the CRC of the PDCCH is scrambled by using the P-RNTI. In the current DCI format 1_0 scrambled by using the P-RNTI, there are reserved 6 bits not used. In addition, a short message indicator is introduced in the DCI format 1_0 scrambled by using the P-RNTI for indicating indication information for system message update and Public Warning System (PWS) notification information. The PWS notification information includes Earthquake and Tsunami Warning System (ETWS) notification information and Commercial Mobile Alert Service (CMAS) notification information. If the UE monitors the indication information for system message update and/or the PWS notification information, the UE begins to receive system information.

In the current NR paging design, the UE needs to monitor the PDCCH at each PO position of the UE per se, but actually there may be no paging message at the PO position, that is, even if the PDCCH scrambled by using the P-RNTI is monitored by the UE, the UE still needs to monitor the PDSCH to determine whether there is actually a paging message.

Even if only one UE needs to be paged in one PO, according to the current paging design, all the UEs in the PO need to monitor the paging PDCCH and the PDSCH scheduled by the PDCCH. This monitoring is useless for the UE(s) that do(es) not need to be paged. Therefore, the UE(s) in a Radio Resource Control (RRC)_IDLE or RRC_INACTIVE state would consume a lot of energy on invalid monitoring of the paging PDCCH and receiving of the paging message PDSCH.

To sum up, in the NR, it may indicate through a physical signal or channel whether one PO or some of UEs in one PO need to monitor the paging PDCCH and/or PDSCH, so as to avoid the UE(s) from performing unnecessary monitoring of the paging PDCCH or PDSCH.

At the same time, the PWS notification may also be indicated through the physical signal or channel without monitoring the paging PDCCH scrambled by using the P-RNTI.

Based on this, the embodiments of the present disclosure provide a solution for indicating paging detection and a solution for detection to avoid the UE from performing unnecessary monitoring. The specific implementation mode of the present disclosure is described below in combination with the accompanying drawings.

During description, the implementation will be described respectively from the UE side and the base station side, and then an example of cooperative implementation of the two will be given to better understand the implementation of the solutions given in the embodiments of the present disclosure. Such a description way does not mean that the two must implement their respective solutions together or separately. Actually, when the UE and the base station implement their respective solutions separately, they also solve the problems of the UE side and the base station side respectively. When the two are combined, a better technical effect will be acquired.

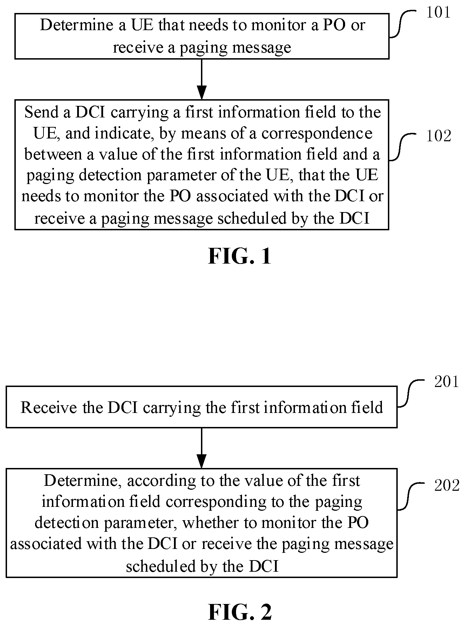

FIG. 1 is an implementation flowchart of a method for indicating paging detection on a network side. As shown in FIG. 1, the method may include the following steps.

At S101, UE that needs to monitor a PO or receive a paging message is determined.

At S102, DCI carrying a first information field is sent to the UE, and it is indicated, by means of a correspondence between a value of the first information field and a paging detection parameter of the UE, that the UE needs to monitor a PO associated with the DCI or receive a paging message scheduled by the DCI.

FIG. 2 is an implementation flowchart of a method for paging detection on a UE side. As shown in FIG. 2, the method may include the following steps.

At S201, the DCI carrying the first information field is received.

At S202, it is determined, according to the value of the first information field corresponding to the paging detection parameter, whether to monitor the PO associated with the DCI or receive the paging message scheduled by the DCI.

In an implementation, the paging detection parameter is determined according to one or a combination of the following parameters:

a UE identity, a number of PFs in one DRX cycle, a number of POs for a PF, and a length of the first information field.

It is to be noted that the term "paging detection parameter" may be named as needed, or it may be named something else in other technical literature or in the future, as long as the technical meaning is indicating, by means of the correspondence between the value of the first information field and the paging detection parameter of the UE, that the UE needs to monitor the PO associated with the DCI or receive the paging message scheduled by the DCI. That is, the parameter that meets this meaning is the paging detection parameter mentioned in the present application. The paging detection parameter may be determined according to one or a combination of the UE identity, the number of PFs in one DRX cycle, the number of POs for a PF, and the length of the first information field.

In an implementation, the UE identity is a 5G-S-TMSI, a remainder of 5G-S-TMSI divided by 1024, or 0.

Specifically, the UE identity is the 5G Temporary Mobile Subscriber Identity, or a remainder of the 5G Temporary Mobile Subscriber Identity divided by 1024, or 0.

In an implementation, the paging detection parameter is equal to floor $[UE\_ID/(N*Ns)]$ mod L, where UE_ID is the UE identity, L is the length of the first information field, N is the number of PFs in one DRX cycle, and Ns is the number of POs for a PF.

In an implementation, the operation of indicating, by means of the correspondence between the value of the first information field and the paging detection parameter of the UE, that the UE needs to monitor the PO associated with the DCI or receive the paging message scheduled by the DCI includes, indicating, by using the bitmap in the first information field, the paging detection parameter of at least one UE that needs to monitor the PO associated with the DCI or receive the paging message scheduled by the DCI.

Correspondingly, on the UE side,

the operation of determining, according to the value of the first information field corresponding to the paging detection parameter, whether to monitor the PO associated with the DCI or receive the paging message scheduled by the DCI includes, determining, according to the bitmap in the first information field, at least one paging detection parameter, with which at least one UE needs to monitor the PO associated with the DCI or receive the paging message scheduled by the DCI.

Specifically, the first information field uses the bitmap (bit map, or bit indication) to indicate at least one pager detection parameter, with which at least one UE needs to monitor the PO associated with the DCI or receive the paging message.

The inventor notices that the following rules may be found from the current calculation formula of the PF and the PO.

For UE_IDs in an interval of N*Ns, a same PO would be calculated . That is, for UE_ID, UE_ID+N*Ns, UE_ID+2*N*Ns and so on, the calculated PO is the same. In other words, the UEs with these UE_IDs will monitor the paging DCI and the paging message at the same position.

Just because the UEs with the UE_IDs meeting the above rule monitor the same paging DCI at only one position, it is necessary for the UEs to continue to monitor the PDSCH scheduled by the paging DCI, so as to determine whether it really has its own paging message. Therefore, in the present solution, the network side sends another DCI to indicate which UE(s) in one PO really need(s) to monitor the PO or receive the paging message.

In a specific implementation, a simplest way is using a hash function as the paging detection parameter, for example, the length of the first information field is L, and the paging detection parameter is UE_ID mod L; the DCI indicates, by means of the bitmap, at least one paging detection parameter, with which at least one UE needs to monitor the PO or receive the paging message, for example, if the first information field is 101000, the UEs which meet that UE_ID mod L is equal to 0 and 2 need to monitor the PO or receive the paging message.

However, such a manner for calculating the paging detection parameter does not use all the bits of the first information field in some scenarios, for example,
T=320, N=8, Ns=2, L=6.

If PF is 40 and PO is 1, it can be seen that for UE_IDs at an interval of 16, a same PO would be calculated. If the calculation formula of UE_ID mod 6 is selected, the result will have only three values, namely 3, 1 and 5, that is, even if there are bits of L=6 that can be used as the first information field for dividing the UEs in a PO, only 3 bits are used. Similarly, the result of UE_ID/6 has only three values, namely 4, 0 and 2, and only 3 bits in the first information field of 6 bits are used.

Therefore, in the implementation, floor [UE_ID/(N*Ns)] mod L may be selected as the paging detection parameter, so that the result is 0, 1, 2, 3, 4 and 5 regardless of whether the UE_ID is 5G-S-TMSI or 5G-S-TMSI mod 1024, that is, L=6 bits may be fully utilized.

In addition, by means of the formula, all the UEs in the PO can be evenly allocated with 6 values of the paging detection parameter. In this way, the length of the first information field may be maximally utilized, and the length of the first information field may be any value. By means of the formula, the UEs in a PO may be evenly allocated with different values of the paging detection parameter.

In this way, the network side may also indicate, through the bitmap of the first information field of the DCI, at least one paging detection parameter, with which at least one UE needs to monitor the PO or receive the paging message.

| 5G-S-TMS I | UEI D | PF=(T div N)* (UEID mod N) | PO=floor(U EID /N) mod Ns | UEID mod 6 | UEID /6 | UEID /(N*Ns) mod 6 | 5G-S-TMSI / (N*Ns) mod 6 |
|---|---|---|---|---|---|---|---|
| 1033 | 9 | 40 | 1 | 3 | 4 | 0 | 4 |
| 1049 | 25 | 40 | 1 | 1 | 0 | 1 | 5 |
| 1065 | 41 | 40 | 1 | 5 | 2 | 2 | 0 |
| 1081 | 57 | 40 | 1 | 3 | 4 | 3 | 1 |
| 1097 | 73 | 40 | 1 | 1 | 0 | 4 | 2 |
| 1113 | 89 | 40 | 1 | 5 | 2 | 5 | 3 |
| 1129 | 105 | 40 | 1 | 3 | 4 | 0 | 4 |
| 1145 | 121 | 40 | 1 | 1 | 0 | 1 | 5 |
| 1161 | 137 | 40 | 1 | 5 | 2 | 2 | 0 |
| 1177 | 153 | 40 | 1 | 3 | 4 | 3 | 1 |
| 1193 | 169 | 40 | 1 | 1 | 0 | 4 | 2 |
| 1209 | 185 | 40 | 1 | 5 | 2 | 5 | 3 |
| 1225 | 201 | 40 | 1 | 3 | 4 | 0 | 4 |
| 1241 | 217 | 40 | 1 | 1 | 0 | 1 | 5 |
| 1257 | 233 | 40 | 1 | 5 | 2 | 2 | 0 |
| 1273 | 249 | 40 | 1 | 3 | 4 | 3 | 1 |
| 1289 | 265 | 40 | 1 | 1 | 0 | 4 | 2 |
| 1305 | 281 | 40 | 1 | 5 | 2 | 5 | 3 |
| 1321 | 297 | 40 | 1 | 3 | 4 | 0 | 4 |
| 1337 | 313 | 40 | 1 | 1 | 0 | 1 | 5 |
| 1353 | 329 | 40 | 1 | 5 | 2 | 2 | 0 |
| 1369 | 345 | 40 | 1 | 3 | 4 | 3 | 1 |
| 1385 | 361 | 40 | 1 | 1 | 0 | 4 | 2 |
| 1401 | 377 | 40 | 1 | 5 | 2 | 5 | 3 |
| 1417 | 393 | 40 | 1 | 3 | 4 | 0 | 4 |
| 1433 | 409 | 40 | 1 | 1 | 0 | 1 | 5 |
| 1449 | 425 | 40 | 1 | 5 | 2 | 2 | 0 |
| 1465 | 441 | 40 | 1 | 3 | 4 | 3 | 1 |
| 1481 | 457 | 40 | 1 | 1 | 0 | 4 | 2 |
| 1497 | 473 | 40 | 1 | 5 | 2 | 5 | 3 |

(continued)

| 5G-S-TMS I | UEID | PF=(T div N)* (UEID mod N) | PO=floor(U EID /N) mod Ns | UEID mod 6 | UEID /6 | UEID /(N*Ns) mod 6 | 5G-S-TMSI / (N*Ns) mod 6 |
|---|---|---|---|---|---|---|---|
| 1513 | 489 | 40 | 1 | 3 | 4 | 0 | 4 |
| 1529 | 505 | 40 | 1 | 1 | 0 | 1 | 5 |
| 1545 | 521 | 40 | 1 | 5 | 2 | 2 | 0 |
| 1561 | 537 | 40 | 1 | 3 | 4 | 3 | 1 |
| 1577 | 553 | 40 | 1 | 1 | 0 | 4 | 2 |
| 1593 | 569 | 40 | 1 | 5 | 2 | 5 | 3 |
| 1609 | 585 | 40 | 1 | 3 | 4 | 0 | 4 |
| 1625 | 601 | 40 | 1 | 1 | 0 | 1 | 5 |
| 1641 | 617 | 40 | 1 | 5 | 2 | 2 | 0 |
| 1657 | 633 | 40 | 1 | 3 | 4 | 3 | 1 |
| 1673 | 649 | 40 | 1 | 1 | 0 | 4 | 2 |
| 1689 | 665 | 40 | 1 | 5 | 2 | 5 | 3 |
| 1705 | 681 | 40 | 1 | 3 | 4 | 0 | 4 |
| 1721 | 697 | 40 | 1 | 1 | 0 | 1 | 5 |
| 1737 | 713 | 40 | 1 | 5 | 2 | 2 | 0 |
| 1753 | 729 | 40 | 1 | 3 | 4 | 3 | 1 |
| 1769 | 745 | 40 | 1 | 1 | 0 | 4 | 2 |
| 1785 | 761 | 40 | 1 | 5 | 2 | 5 | 3 |
| 1801 | 777 | 40 | 1 | 3 | 4 | 0 | 4 |
| 1817 | 793 | 40 | 1 | 1 | 0 | 1 | 5 |
| 1833 | 809 | 40 | 1 | 5 | 2 | 2 | 0 |
| 1849 | 825 | 40 | 1 | 3 | 4 | 3 | 1 |

In an implementation, on the network side, the method may further include the following operation.

A second information field indicating that the UE needs to update the system information is carried in the DCI.

And/or, a third information field indicating that the UE needs to acquire the ETWS information and/or the CMAS information is carried in the DCI.

In specific implementation, system message update refers to acquiring a Broadcast Control channel (BCCH) other than SIB6, SIB7, and SIB8.

The ETWS information is acquired through the SIB6 or the SIB7, and the CMAS information is acquired through the SIB8.

Correspondingly, on the UE side, the method may further include the following operations.

When the second information field indicating that the UE needs to update the system information is carried in the DCI, the system information is acquired according to the indication.

And/or, when the third information field indicating that the UE needs to acquire the ETWS information and/or the CMAS information is carried in the DCI, the SIB6 or the SIB7 or the SIB8 is received according to the indication, to receive the ETWS information and/or the CMAS information.

Specifically, for example, if the value of the second information field is 1, the UE acquires the system information.

If the value of the third information field is 1, the UE receives the SIB6 or the SIB7 or the SIB8.

In an implementation, on the network side, the method may further include the following operation.

The CRC of the DCI is scrambled by using the P-RNTI.

Or, the CRC of the DCI is scrambled by using the RNTI, which is not P-RNTI.

In specific implementation, when the CRC of the DCI is scrambled by using the P-RNTI, bits of the first information field from higher bits to lower bits are mapped to the values of the paging detection parameter from 0 to L-1; if a bit value at a bit position in the first information field is 1, the paging detection parameter is that the UE with a paging detection parameter corresponding to the bit position monitors the PO associated with the DCI.

Or, the CRC of the DCI is scrambled by using an RNTI, which is not P-RNTI, the bits of the first information field from higher bits to lower bits are mapped to the values of the paging detection parameter from 0 to L-1; if the bit value of the bit position in the first information field is 1, the paging detection parameter is that the UE with the paging detection parameter corresponding to the bit position receives the paging message scheduled by the DCI.

Specifically, for the DCI scrambled by using the P-RNTI, the bits of the first information field from higher bits to lower bits are mapped to the values from 0 to L-1 of the paging detection parameter. If the value of a bit at a certain position in the first information field is 1, the UE equal to the value of the paging detection parameter corresponding to the bit position receives the paging message.

For the DCI scrambled by usingthe RNTI, which is not P-RNTI, the bits of the first information field from higher bits to lower bits are mapped to the values from 0 to L-1 of the paging detection parameters. If the value of a bit at a certain position in the first information field is 1, the UE equal to the value of the paging detection parameter corresponding to the bit position monitors the PO associated with the DCI.

Correspondingly, on the UE side, the method may further include the following operation.

The CRC of the DCI is descrambled by using the P-RNTI.

Or, the CRC of the DCI is descrambled by using the RNTI, which is not P-RNTI.

In specific implementation, when the CRC of the DCI is descrambled by using the P-RNTI, the bits of the first information field from higher bits to lower bits are mapped to the values of the paging detection parameter from 0 to L-1; if the bit value of the first information field corresponding to the paging detection parameter of the UE is 1, the UE monitors the PO associated with the DCI.

Or, when the CRC of the DCI is descrambled by using the RNTI, which is not P-RNTI, the bits of the first information field from higher bits to lower bits are mapped to the values of the paging detection parameter from 0 to L-1; if the bit value of the first information field corresponding to the paging detection parameter of the UE is 1, the UE receives the paging message scheduled by the DCI.

Specifically, the UE receives the DCI scrambled by using the RNTI, which is not P-RNTI, and the bits of the first information field from higher bits to lower bits are mapped to the values from 0 to L-1 of the paging detection parameter. If the value of the bit corresponding to the value of the paging detection parameter of the UE in the first information field is 1, the UE monitors the PO associated with the DCI, otherwise the UE does not monitor the PO associated with the DCI.

The UE receives the DCI scrambled by using the P-RNTI, and the bits of the first information field from higher bits to lower bits are mapped to the values from 0 to L-1 of the paging detection parameters. If the value of the bit corresponding to the value of the paging detection parameter of the UE in the first information field is 1, the UE receives the paging message; otherwise the UE does not receive the paging message.

Description is given below based on the embodiments.

Embodiment 1

1. The DCI scrambled by using the RNTI, which is not P-RNTI

The DCI, of which CRC is scrambled by using the RNTI (e.g. a Power Saving RNTI (PS-RNTI)), which is not P-RNTI, carries the first information field of L bits, and indicates, by using the bitmap, the paging detection parameter of the UE that needs to monitor the PO associated with the DCI.

For example, the paging detection parameter is equal to floor (UE_ID/N*Ns) mod L, where N is the number of PFs included in one DRX cycle of the UE, Ns is the number of POs included in a PF, UE_ID is equal to 5G-S-TMSI mod 1024.

The PO that may be associated with the DCI is time division multiplexed. The UE first monitors the DCI, and determines, according to the first information field, whether it needs to monitor the PO associated with the DCI after monitoring the DCI.

For example, L is equal to 6, and the 6 bits in the DCI from higher bits to lower bits correspond to the values (0, 1, 2, 3, 4 and 5) of the paging detection parameter. If the bit value at a certain position is 1, the UE having a value of a paging detection parameter equal to the value of the paging detection parameter corresponding to the bit position needs to monitor the PO associated with the DCI.

For example, if the 6 bits in the DCI are 010000, the UE of which the value of the paging detection parameter is 1 needs to monitor the PO associated with the DCI, and the UE of which the value of the paging detection parameter is calculated as a value other than 1 does not need to monitor the PO associated with the DCI.

In the traditional paging design, if there is one UE in a PO needing to receive the paging message, all the UEs need to monitor the PDCCH scrambled by using the P-RNTI in the PO. By introducing the present paging indication method, the UEs in a PO may be divided into N groups, and it is indicated through the bitmap of the first information field which UE needs to monitor the PO associated with the DCI. In this way, it may be avoided that all the UEs in a PO from monitor the PO, and only the UE that really needs to receive paging monitors the PO, thereby avoiding the energy consumption of other UEs on invalid monitoring of the PO and the PDSCH scheduled by the PO.

The DCI of which CRC is scrambled by using the RNTI (e.g. PS-RNTI), which is not P-RNTI, carries the first information field of 1 bit and the second information field of 1 bit.

If the bit value of the first information field is 1, all the UEs that monitor the DCI conducts the process of system message update. If the bit value of the second information field is 1, the UE receives the SIB6 or the SIB7 or the SIB8 to receive the ETWS information and/or the CMAS information.

The system information update and the ETWS and CMAS information are notified for all the UEs. In the traditional paging design, the DCI scrambled by using the P-RNTI would indicate to the UEs whether there is system message to be updated or whether there is ETWS and CMAS information to be received.

After new DCI scrambled by using the RNTI is introduced, the UE needs to first monitor the new DCI, and then determine whether to monitor the DCI scrambled by using the P-RNTI that is associated with the new DCI. In a scenario where the system information is updated or the ETWS and CMAS information is notified, the UE may acquire a notification message directly from the new DCI without monitoring the DCI scrambled by using the P-RNTI. In this way, it may avoid the UE from acquiring the same notification message for twice by monitoring the DCI, so as to avoid the energy consumption on useless PDCCH detection.

2. The DCI scrambled by using the P-RNTI

The UE receives the DCI scrambled by using the P-RNTI, and the DCI carries the first information field.

The bits of the first information field from higher bits to lower bits are mapped to the values of the paging detection parameters from 0 to L-1.

If the value of the bit corresponding to the value of the paging detection parameter of the UE in the first information field is 1, the UE receives the paging message scheduled by the DCI; otherwise the UE does not receive the paging message scheduled by the DCI.

Embodiment 2

The DCI of which CRC is scrambled by using the P-RNTI carries the first information field of L bits, and indicates, by means of the bitmap, the paging detection parameter of the UE that needs to receive the paging message.

For example, the paging detection parameter is equal to floor (UE_ID/N*Ns) mod L, where N is the number of PFs included in one DRX cycle of the UE, Ns is the number of POs included in a PF, UE_ID is equal to 5G-S-TMSI mod 1024.

For example, L is equal to 6, and the 6 bits in the DCI from higher bits to lower bits correspond to the values (0, 1, 2, 3, 4, 5) of the paging detection parameters. If the bit value at a certain position is 1, the corresponding UE with the value of the paging detection parameter needs to monitor the paging message in the PDSCH scheduled by the DCI.

For example, if the 6 bits in the DCI are 010000, the UE of which the value of the paging detection parameter is 1 needs to monitor the paging message scheduled by the DCI, and the UE of which the value of the paging detection parameter is calculated as a value other than 1 does not need to monitor the paging message scheduled by the DCI.

In the traditional paging design, if there is a UE in a PO needing to receive the paging message, all the UEs need to monitor the PDCCH scrambled by using the P-RNTI and the PDSCH scheduled by the PDCCH in the PO. By introducing the present paging indication method, the UEs in a PO may be divided into N groups, and it is indicated through the bitmap of the first information field which UE needs to monitor the paging message carried in the PDSCH scheduled by the DCI. In this way, it may be avoided that all the UEs need to monitor the paging message carried in the PDSCH, and only the UE that really needs to the receive the paging receives the paging message in the PDSCH, thereby avoiding other UEs from the energy consumption on invalid detection of the PDSCH.

Based on the same inventive concept, the embodiments of the present disclosure also provide a base station, UE, a communication device, and a computer-readable storage medium. Because the principle of solving the problem of these devices is similar to that of the method for indicating paging detection and the method for paging detection, for the implementation of these devices, see the implementation of the methods, and the repetitive part will not be described again.

The technical solution provided by the embodiments of the present disclosure may be implemented as follows.

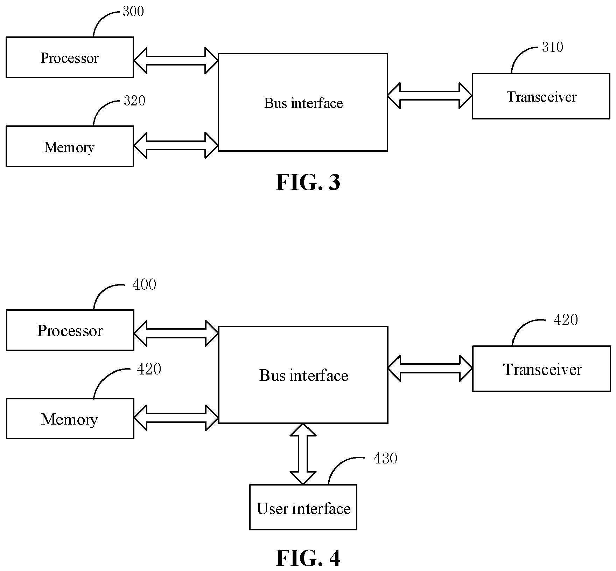

FIG. 3 is a structure diagram of a base station. As shown in FIG. 3, the base station may include: a processor 300 and a transceiver 310.

The processor 300 is configured to read a program in a memory 320 and execute the following process: the UE that needs to monitor the PO or receive the paging message is determined.

The transceiver 310 is configured to receive and transmit data under the control of the processor and execute the following process:

send the DCI carrying the first information field to the UE, and indicate, by means of the correspondence between the value of the first information field and the paging detection parameter of the UE, that the UE needs to monitor the PO associated with the DCI or receive the paging message scheduled by the DCI.

The paging detection parameter is determined according to one or a combination of the following parameters: the UE identity, the number of PFs in one DRX cycle, the number of POs for a PF, and the length of the first information field.

In an implementation, the UE identity is the 5G-S-TMSI, the remainder of 5G-S-TMSI divided by 1024, or 0.

In an implementation, the paging detection parameter is equal to floor [UE_ID/(N*Ns)] mod L, where UE_ID is the UE identity, L is the length of the first information field, N is the number of PFs in one DRX cycle, and Ns is the number of POs for a PF.

In an implementation, the operation of indicating, by means of the correspondence between the value of the first information field and the paging detection parameter of the UE, that the UE needs to monitor the PO associated with the DCI or receive the paging message scheduled by the DCI includes that, indicating, by using the bitmap in the first information field, the paging detection parameter of at least one UE that needs to monitor the PO associated with the DCI or receive the paging message scheduled by the DCI.

In an implementation, the following operations may be further included.

The second information field indicating that the UE needs to update the system information is carried in the DCI.

And/or, the third information field indicating that the UE needs to acquire the ETWS information and/or the CMAS information is carried in the DCI.

In an implementation, the following operation may be further included.

Cyclic Redundancy Check (CRC) of the DCI is scrambled by using a Paging-Radio Network Temporary Identity (P-RNTI).

Or, the CRC of the DCI is scrambled by using the RNTI, which is not P-RNTI.

When the CRC of the DCI is scrambled by using the P-RNTI, bits of the first information field from higher bits to lower bits are mapped to the values of the paging detection parameter from 0 to L-1; if a bit value at a bit position in the first information field is 1, the paging detection parameter is that the UE with a paging detection parameter corresponding to the bit position monitors the PO associated with the DCI.

When the CRC of the DCI is scrambled by using an RNTI, which is not P-RNTI, the bits of the first information field from higher bits to lower bits are mapped to the values of the paging detection parameter from 0 to L-1; if the bit value of the bit position in the first information field is 1, the paging detection parameter is that the UE with the paging detection parameter corresponding to the bit position receives the paging message scheduled by the DCI.

In FIG. 3, a bus architecture may consist of any number of interconnected buses and bridges which are linked together by various circuits of one or more processors represented by the processor 300 and memories represented by the memory 320. The bus architecture may also link various other circuits together, such as peripheral devices, voltage regulators, and power management circuits, which are well known in the field and therefore are not described further here. A bus interface provides the interface. The transceiver 310 may be multiple components, that is, including a transmitter and a receiver, which provide a unit for communicating with a variety of other devices on a transmission medium. The processor 300 is responsible for managing the bus architecture and general processing, and the memory 320 may store the data used by the processor 300 to perform operations.

The embodiments of the present disclosure provide a base station, which is not part of the present disclosure and is present for illustration purpose. The base station may include a determining module and a sending module.

The determining module is configured to determine the UE that needs to monitor the PO or receive the paging message.

The sending module is configured to send the DCI carrying the first information field to the UE, and indicate, by means of the correspondence between the value of the first information field and the paging detection parameter of the UE, that the UE needs to monitor the PO associated with the DCI or receive the paging message scheduled by the DCI.

The paging detection parameter is determined according to one or a combination of the following parameters: the UE identity, the number of PFs in one DRX cycle, the number of POs for a PF, and the length of the first information field.

In an implementation, the UE identity is the 5G-S-TMSI, the remainder of 5G-S-TMSI divided by 1024, or 0.

In an implementation, the paging detection parameter is equal to floor [UE_ID/(N*Ns)] mod L, where UE_ID is the UE identity, L is the length of the first information field, N is the number of PFs in one DRX cycle, and Ns is the number of POs for a PF.

In an implementation, the sending module is further configured to inicate, by using the bitmap in the first information field, the paging detection parameter of at least one UE that needs to monitor the PO associated with the DCI or receive the paging message scheduled by the DCI, in order to indicate, by means of the correspondence between the value of the first information field and the paging detection parameter of the UE, that the UE needs to monitor the PO associated with the DCI or receive the paging message scheduled by the DCI.

In an implementation, the sending module is further configured to:

carry I the second information field indicating that the UE needs to update the system informationin the DC; and/or

carry the third information field indicating that the UE needs to acquire the ETWS information and/or the CMAS information in the DCI.

In an implementation, the sending module is further configured to:

scramble the CRC of the DCI by using the P-RNTI; or,
scramble the CRC of the DCI by using the RNTI, which is not P-RNTI.

When the CRC of the DCI is scrambled by using the P-RNTI, bits of the first information field from higher bits to lower bits are mapped to the values of the paging detection parameter from 0 to L-1; if a bit value at a bit position in the first information field is 1, the paging detection parameter is that the UE with a paging detection parameter corresponding to the bit position monitors the PO associated with the DCI.

When the CRC of the DCI is scrambled by using an RNTI, which is not P-RNTI, the bits of the first information field from higher bits to lower bits are mapped to the values of the paging detection parameter from 0 to L-1; if the bit value of the bit position in the first information field is 1, the paging detection parameter is that the UE with the paging detection parameter corresponding to the bit position receives the paging message scheduled by the DCI.

For the convenience of description, the parts of the above device are functionally divided into modules or units and described separately. Of course, during the implementation of the present disclosure, the functions of the modules or units may be realized in the same or more software or hardware.

FIG. 4 is a structure diagram of a UE. As shown in FIG. 4, the UE may include: a transceiver 410 and a processor 400.

The transceiver 410 is configured to receive and transmit data under the control of the processor 400 and execute the following process:
the DCI carrying the first information field is received.

The processor 400 is configured to read the program in the memory 420 and execute the following process:
it is determined, according to the value of the first information field corresponding to the paging detection parameter, whether to monitor the PO associated with the DCI or receive the paging message scheduled by the DCI.

The paging detection parameter is determined according to one or a combination of the following parameters: the UE identity, the number of PFs in one DRX cycle, the number of POs for a PF, and the length of the first information field.

In an implementation, the UE identity is the 5G-S-TMSI, the remainder of 5G-S-TMSI divided by 1024, or 0.

In an implementation, the paging detection parameter is equal to floor [UE_ID/(N*Ns)] mod L, where UE_ID is the UE identity, L is the length of the first information field, N is the number of PFs in one DRX cycle, and Ns is the number of POs for a PF.

In an implementation, the operation of determining, according to the value of the first information field corresponding to the paging detection parameter, whether to monitor the PO associated with the DCI or receive the paging message scheduled by the DCI includes, determining, according to the bitmap in the first information field, at least one paging detection parameter, with which at least one UE needs to monitor the PO associated with the DCI or receive the paging message scheduled by the DCI.

In an implementation, the following operations may be further included.

When the second information field indicating that the UE needs to update the system information is carried in the DCI, the system information is acquired according to the indication.

And/or, when the third information field indicating that the UE needs to acquire the ETWS information and/or the CMAS information is carried in the DCI, the SIB6 or the SIB7 or the SIB8 is received according to the indication, to receive the ETWS information and/or the CMAS information.

In an implementation, the following operation may be further included.

Cyclic Redundancy Check (CRC) of the DCI is scrambled by using a Paging-Radio Network Temporary Identity (P-RNTI).

Or, the CRC of the DCI is scrambled by using an RNTI, which is not P-RNTI.

When the CRC of the DCI is descrambled by using the P-RNTI, the bits of the first information field from higher bits to lower bits are mapped to the values of the paging detection parameter from 0 to L-1; if the bit value of the first information field corresponding to the paging detection parameter of the UE is 1, the UE monitors the PO associated with the DCI.

Or, when the CRC of the DCI is descrambled by using the RNTI, which is not P-RNTI, the bits of the first information field from higher bits to lower bits are mapped to the values of the paging detection parameter from 0 to L-1; if the bit value of the first information field corresponding to the paging detection parameter of the UE is 1, the UE receives the paging message scheduled by the DCI.

In FIG. 4, a bus architecture may consist of any number of interconnected buses and bridges which are linked together by various circuits of one or more processors represented by the processor 400 and memories represented by the memory 420. The bus architecture may also link various other circuits together, such as peripheral devices, voltage regulators, and power management circuits, which are well known in the field and therefore are not described further here. The bus interface provides the interface. The transceiver 410 may be multiple components, that is, including a transmitter and a receiver, which provide a unit for communicating with a variety of other devices on a transmission medium. For different user devices, a user interface 430 may also include interfaces for connecting desired external and internal devices. The connected devices include, but are not limited to, keypads, monitors, speakers, microphones, joysticks, etc.

The processor 400 is responsible for managing the bus architecture and general processing, and the memory 420 may store the data used by the processor 400 to perform operations.

The embodiments of the present disclosure provide a UE, which is not part of the present disclosure and is present for illustration purpose. The UE may include a receiving module and an executing module.

The receiving module is configured to receive the DCI carrying the first information field.

The executing module is configured to determine, according to the value of the first information field corresponding to the paging detection parameter, whether to monitor the PO associated with the DCI or receive the paging message scheduled by the DCI.

The paging detection parameter is determined according to one or a combination of the following parameters: the UE identity, the number of PFs in one DRX cycle, the number of POs for a PF, and the length of the first information field.

In an implementation, the UE identity is the 5G-S-TMSI, the remainder of 5G-S-TMSI divided by 1024, or 0.

In an implementation, the paging detection parameter is equal to floor [UE_ID/(N*Ns)] mod L, where UE_ID is the UE identity, L is the length of the first information field, N is the number of PFs in one DRX cycle, and Ns is the number of POs for a PF.

In an implementation, the executing module is further configured to determine, according to the bitmap in the first information field, at least one paging detection parameter, with which at least one UE needs to monitor the PO associated with the DCI or receive the paging message scheduled by the DCI, in order to determine, according to the value of the first information field corresponding to the paging detection parameter, whether to monitor the PO associated with the DCI or receive the paging message scheduled by the DCI.

In an implementation, the executing module is further configured to:

when the second information field indicating that the UE needs to update the system information is carried in the DCI, acquire the system information according to the indication; and/or,

when the third information field indicating that the UE needs to acquire the ETWS information and/or the CMAS information is carried in the DCI, receive the SIB6 or the SIB7 or the SIB8 according to the indication, to receive the ETWS information and/or the CMAS information.

In an implementation, the executing module is further configured to:

descramble the CRC of the DCI by using the P-RNTI; or,
descramble the CRC of the DCI by using the RNTI, which is not P-RNTI.

When the CRC of the DCI is descrambled by using the P-RNTI, the bits of the first information field from higher bits to lower bits are mapped to the values of the paging detection parameter from 0 to L-1; if the bit value of the first information field corresponding to the paging detection parameter of the UE is 1, the UE monitors the PO associated with the DCI.

Or, when the CRC of the DCI is descrambled by using the RNTI, which is not P-RNTI, the bits of the first information field from higher bits to lower bits are mapped to the values of the paging detection parameter from 0 to L-1; if the bit value of the first information field corresponding to the paging detection parameter of the UE is 1, the UE receives the paging message scheduled by the DCI.

For the convenience of description, the parts of the above device are functionally divided into modules or units and described separately. Of course, during the implementation of the present disclosure, the functions of the modules or units may be realized in the same or more software or hardware.

The embodiments of the present disclosure provide a communication device, which may include: a memory, a processor and a computer program which is stored on the memory and runnable on the processor. The processor, when executing the computer program, implements the above method for indicating paging detection and/or the method for paging detection.

For details, see the specific implementation mode of the aforementioned method for indicating paging detection or the specific implementation mode of the method for paging detection.

The embodiments of the present disclosure provide a computer-readable storage medium, in which the computer program for executing the above method for indicating paging detection and/or the method for paging detection is stored.

For details, see the specific implementation mode of the aforementioned method for indicating paging detection or the specific implementation mode of the method for paging detection.

To sum up, in the technical solutions provided by the embodiments of the present disclosure, the network side sends a DCI that carries the first information field for indicating the paging detection parameter of the UE that needs to monitor the PO associated with the DCI or receive the paging message.

The paging detection parameter is determined by at least one of the following parameters: the UE identity, the number of PFs in one DRX cycle, the number of POs for a PF, and the length of the first information field.

Further, the indication information of system message update and/or PWS notification may also be carried in the DCI of which CRC is scrambled by using the RNTI, which is not P-RNTI.

In the solutions, the DCI is used to indicate which UE(s) in a PO need(s) to monitor the PO or receive the paging message.

Further, by means of the formula, the UEs in a PO may be evenly distributed on different paging detection parameters, and the length of the first information field may be fully ustilized, to reduce the possiblity of false wake-up.

To sum up, the technical solutions provided by the embodiments of the present disclosure are used for indicating that some of the UEs in a PO need to monitor the PO or receive the paging message, so as to realize energy saving of the UE(s) in the RRC_IDLE and RRC_INACTIVE state, and avoid unnecessary detection of the paging PDSCH. Further, beside the above indication, how to evenly group the UEs in a PO to provide an indication of wake-up is also considered.

Those skilled in the art should understand that the embodiments of the present disclosure may be provided as a method, a system or a computer program product Thus, the present disclosure may adopt forms of complete hardware embodiments, complete software embodiments or embodiments integrating software and hardware. Moreover, the present disclosure may adopt the form of a computer program product which is implemented on one or more computer available storage media (including, not limited to, a magnetic disk memory or an optical memory) including computer available program codes.

The present disclosure is described with reference to flowcharts and/or block diagrams of the method, the device (system) and the computer program product according to the embodiments of the present disclosure. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram.

**Claims**

1. A method for indicating paging detection, performed by a base station, comprising:

   determining (101) a User Equipment, UE, that needs to monitor a Paging Occasion, PO, or receive a paging message;
   sending (102) Downlink Control Information, DCI, carrying a first information field to the UE, and indicating, by means of a correspondence between a value of the first information field and a paging detection parameter of the UE, that the UE needs to monitor a PO associated with the DCI or receive a paging message scheduled by the DCI;

wherein the paging detection parameter is determined according to one or a combination of the following parameters:

a UE identity, a number of Paging Frames, PFs, in one Discontinuous Reception, DRX, cycle, a number of POs for a PF, and a length of the first information field,
**characterized in that** the paging detection parameter is equal to floor [UE_ID/(N*Ns)] mod L, where UE_ID is the UE identity, L is the length of the first information field, N is the number of PFs in one DRX cycle, and Ns is the number of POs for a PF.

2. The method of claim 1, wherein the UE identity is a 5G Temporary Mobile Subscriber Identity, 5G-S-TMSI, or a remainder of the 5G-S-TMSI divided by 1024 or 0.

3. The method of claim 1, wherein indicating, by means of the correspondence between the value of the first information field and the paging detection parameter of the UE, that the UE needs to monitor the PO associated with the DCI or receive the paging message scheduled by the DCI comprises:
indicating, by using a bitmap in the first information field, the paging detection parameter of at least one UE that needs to monitor the PO associated with the DCI or receive the paging message scheduled by the DCI.

4. The method of claim 1, further comprising at least one of the following:

carrying a second information field indicating that the UE needs to update system information in the DCI; or,
carrying a third information field indicating that the UE needs to acquire at least one of Earthquake and Tsunami Warning System, ETWS, information or Commercial Mobile Alert Service, CMAS, information in the DCI.

5. The method of any one of claims 1 to 4, further comprising:

scrambling Cyclic Redundancy Check, CRC, of the DCI by using a Paging-Radio Network Temporary Identity, P-RNTI; or,
scrambling the CRC of the DCI by using a Radio Network Temporary Identity, RNTI, which is not P-RNTI;
wherein when the CRC of the DCI is scrambled by using the P-RNTI, bits of the first information field from higher bits to lower bits are mapped to values of the paging detection parameter from 0 to L-1; if a bit value at a bit position in the first information field is 1, the UE with a paging detection parameter corresponding to the bit position monitors the PO associated with the DCI; or
when the CRC of the DCI is scrambled by using an RNTI, which is not P-RNTI, the bits of the first information field from higher bits to lower bits are mapped to the values of the paging detection parameter from 0 to L-1; if a bit value of a bit position in the first information field is 1, the UE with a paging detection parameter corresponding to the bit position receives the paging message scheduled by the DCI.

6. A method for paging detection, performed by a User Equipment, UE, comprising:

receiving (201), from a base station, Downlink Control Information, DCI, carrying a first information field;
determining (202), according to a value of the first information field corresponding to a paging detection parameter, whether to monitor a Paging Occasion, PO, associated with the DCI or receive a paging message scheduled by the DCI;
wherein the paging detection parameter is determined according to one or a combination of the following parameters:

a UE identity, a number of Paging Frames, PF, in one Discontinuous Reception, DRX, cycle, a number of POs for a PF, and a length of the first information field,
**characterized in that** the paging detection parameter is equal to floor [UE_ID/(N*Ns)] mod L, where UE_ID is the UE identity, L is the length of the first information field, N is the number of PFs in one DRX cycle, and Ns is the number of POs for a PF.

7. The method of claim 6, wherein the UE identity is a 5G Temporary Mobile Subscriber Identity, 5G-S-TMSI, a remainder of the 5G-S-TMSI divided by 1024, or 0.

8. The method of claim 6, wherein determining, according to the value of the first information field corresponding to the paging detection parameter, whether to monitor the PO associated with the DCI or receive the paging message scheduled by the DCI comprises:
determining, according to a bitmap in the first information field, at least one paging detection parameter, with which at least one UE needs to monitor the PO associated with the DCI or receive the paging message scheduled by the DCI.

9. The method of claim 6, further comprising at least one of the following:

when a second information field indicating that the UE needs to update system information is carried in the DCI, acquiring the system information according to the indication; and/or,

when the third information field indicating that the UE needs to acquire at least one of the ETWS information or the CMAS information is carried in the DCI, receiving the SIB6 or the SIB7 or the SIB8 according to the indication, to receive at least one of the ETWS information or the CMAS information.

10. The method of any one of claims 6 to 9, further comprising:

descrambling Cyclic Redundancy Check, CRC, of the DCI by using a Paging-Radio Network Temporary Identity, P-RNTI; or,
descrambling the CRC of the DCI by using an RNTI, which is not P-RNTI;
wherein, when the CRC of the DCI is descrambled by using the P-RNTI, the bits of the first information field from higher bits to lower bits are mapped to the values of the paging detection parameter from 0 to L-1; if a bit value of the first information field corresponding to the paging detection parameter of the UE is 1, the UE monitors the PO associated with the DCI; or,
when the CRC of the DCI is descrambled by using the RNTI, which is not P-RNTI, the bits of the first information field from higher bits to lower bits are mapped to the values of the paging detection parameter from 0 to L-1; if the bit value of the first information field corresponding to the paging detection parameter of the UE is 1, the UE receives the paging message scheduled by the DCI.

11. A base station, comprising: a memory, a processor and a computer program stored in the memory and runnable on the processor; wherein the processor, when executing the computer program, is configured to implement the method of any one of claims 1 to 5.

12. A User Equipment, UE, comprising: a memory, a processor and a computer program stored in the memory and runnable on the processor; wherein the processor, when executing the computer program, is configured to implement the method of any one of claims 6 to 10.

13. A computer-readable storage medium comprised in a base station, storing a computer program for executing the method of any one of claims 1 to 5.

14. A computer-readable storage medium comprised in a User Equipment, UE, storing a computer program for executing the method of any one of claims 6 to 10.

**Patentansprüche**

1. Verfahren zur Anzeige der Paging-Erfassung, durchgeführt von einer Basisstation, umfassend:

Bestimmen (101) einer Benutzervorrichtung (User Equipment, UE), die ein Paging-Ereignis (Paging Occasion, PO) überwachen oder eine Paging-Nachricht empfangen muss;
Senden (102) von Downlink-Steuerinformationen (Downlink Control Information, DCI), die ein erstes Informationsfeld an die UE übertragen, und Anzeigen, mittels einer Übereinstimmung zwischen einem Wert des ersten Informationsfeldes und einem Paging-Erfassungsparameter der UE, dass die UE ein der DCI zugeordnetes PO überwachen oder eine von den DCI geplante Paging-Nachricht empfangen muss;
wobei der Paging-Erfassungsparameter gemäß einem oder einer Kombination der folgenden Parameter bestimmt wird:

einer UE-Identität, einer Anzahl von Paging Frames, PFs, in einem einzelnen diskontinuierlichen Empfangs-(Discontinuous Reception, DRX) Zyklus, einer Anzahl von POs für einen PF und einer Länge des ersten Informationsfeldes,
**dadurch gekennzeichnet, dass** der Paging-Erfassungsparameter gleich floor [UE_ID/(N*Ns)] mod L ist, wobei UE_ID die UE-Identität ist, L die Länge des ersten Informationsfeldes ist, N die Anzahl der PFs in einem DRX-Zyklus ist und Ns die Anzahl der POs für einen PF ist.

2. Verfahren nach Anspruch 1, wobei die UE-Identität eine 5G Temporary Mobile Subscriber Identity, 5G-S-TMSI, oder ein Rest der 5G-S-TMSI geteilt durch 1024 oder 0 ist.

3. Verfahren nach Anspruch 1, wobei das Anzeigen, mittels der Übereinstimmung zwischen dem Wert des ersten Informationsfeldes und dem Paging-Erfassungsparameter der UE, dass die UE das der DCI zugeordnete PO überwachen oder die von den DCI geplante Paging-Nachricht empfangen muss, umfasst:
Anzeigen, unter Verwendung einer Bitmap in dem ersten Informationsfeld, des Paging-Erfassungsparameters von mindestens einer UE, die das PO überwachen muss, das der DCI zugeordnet ist, oder die die Paging-Nachricht empfangen muss, die von der DCI geplant ist.

4. Verfahren nach Anspruch 1, das mindestens eines der Folgenden umfasst:

Übertragen eines zweiten Informationsfeldes, das anzeigt, dass die UE Systeminformationen in den DCI aktualisieren muss; oder
Übertragen eines dritten Informationsfeldes, das anzeigt, dass die Endvorrichtung mindestens eines von Erdbeben- und Tsunami-Warnsystem- (ETWS) Informationen oder kommerziellen mobilen Alarmierungsdienst- (CMAS) Informationen in den DCI abrufen muss.

5. Verfahren nach einem der Ansprüche 1 bis 4, das ferner umfasst:

Verschlüsseln der zyklischen Redundanzprüfung (Cyclic Redundanz Check, CRC) der DCI unter Verwendung einer temporären Paging-Radio-Netzwerkidentität (Paging-Radio Network Temporary Identity, P-RNTI); oder
Verschlüsseln der CRC der DCI durch Verwendung einer temporären Radio-Netzwerkidentität, RNTI, die nicht P-RNTI ist;
wobei, wenn die CRC der DCI durch Verwendung der P-RNTI verschlüsselt wird, Bits des ersten Informationsfeldes von höheren Bits zu niedrigeren Bits auf Werte des Paging-Erfassungsparameters von 0 bis L-1 abgebildet werden; wenn ein Bitwert an einer Bitposition im ersten Informationsfeld 1 ist, überwacht die UE mit einem der Bitposition entsprechenden Paging-Erfassungsparameter das den DCI zugeordnete PO; oder
wenn die CRC der DCI unter Verwendung einer RNTI, die nicht P-RNTI ist, verschlüsselt wird, werden die Bits des ersten Informationsfeldes von höheren Bits zu niedrigeren Bits auf die Werte des Paging-Erfassungsparameters von 0 bis L-1 abgebildet; wenn ein Bitwert einer Bitposition im ersten Informationsfeld 1 ist, empfängt die UE mit einem Paging-Erfassungsparameter, der der Bitposition entspricht, die von den DCI geplante Paging-Nachricht.

6. Verfahren zur Paging-Erfassung, das von einer Benutzervorrichtung, UE, durchgeführt wird und umfasst:

Empfangen (201), von einer Basisstation, von Downlink-Steuerinformationen, DCI, die ein erstes Informationsfeld übertragen;
Bestimmen (202) in Abhängigkeit von einem Wert des ersten Informationsfeldes, der einem Paging-Erfassungsparameter entspricht, ob ein den DCI zugeordnetes Paging-Ereignis, PO, überwacht oder eine von den DCI geplante Paging-Nachricht empfangen werden soll;
wobei der Paging-Erfassungsparameter gemäß einem oder einer Kombination der folgenden Parameter bestimmt wird:

einer UE-Identität, einer Anzahl von Paging Frames, PFs, in einem einzelnen diskontinuierlichen Empfangs- (Discontinuous Reception, DRX) Zyklus, einer Anzahl von POs für einen PF und einer Länge des ersten Informationsfeldes,
**dadurch gekennzeichnet, dass** der Paging-Erfassungsparameter gleich floor [UE_ID/(N*Ns)] mod L ist, wobei UE_ID die UE-Identität ist, L die Länge des ersten Informationsfeldes ist, N die Anzahl der PFs in einem DRX-Zyklus ist und Ns die Anzahl der POs für einen PF ist.

7. Verfahren nach Anspruch 6, wobei die UE-Identität eine 5G Temporary Mobile Subscriber Identity, 5G-S-TMSI, ein Rest der 5G-S-TMSI geteilt durch 1024 oder 0 ist.

8. Verfahren nach Anspruch 6, wobei das Bestimmen, gemäß dem Wert des ersten Informationsfeldes, das dem Paging-Erfassungsparameter entspricht, ob das den DCI zugeordnete PO überwacht oder die von den DCI geplante Paging-Nachricht empfangen werden soll, umfasst:

Bestimmen, gemäß einer Bitmap in dem ersten Informationsfeld, mindestens eines Paging-Erfassungsparameters, mit dem mindestens eine UE das den DCI zugeordnete PO überwachen oder die von den DCI geplante Paging-Nachricht empfangen muss.

9.  Verfahren nach Anspruch 6, das mindestens eines der Folgenden umfasst:

wenn ein zweites Informationsfeld, das anzeigt, dass die UE Systeminformationen aktualisieren muss, in den DCI übertragen wird, Abrufen der Systeminformationen gemäß der Anzeige; und/oder

wenn das dritte Informationsfeld, das anzeigt, dass die UE mindestens eine der ETWS-Informationen oder der CMAS-Informationen abrufen muss, in den DCI übertragen wird, Empfangen der SIB6 oder der SIB7 oder der SIB8 entsprechend der Anzeige, um mindestens eine der ETWS-Informationen oder der CMAS-Informationen zu empfangen.

10.  Verfahren nach einem der Ansprüche 6 bis 9, das ferner Folgendes umfasst:

Entschlüsseln der zyklischen Redundanzprüfung, CRC, der DCI unter Verwendung einer temporären Paging-Radio-Netzwerkidentität, P-RNTI; oder

Entschlüsseln der CRC der DCI durch Verwendung einer RNTI, die nicht P-RNTI ist;

wobei, wenn die CRC der DCI durch Verwendung der P-RNTI entschlüsselt wird, die Bits des ersten Informationsfeldes von höheren Bits zu niedrigeren Bits auf die Werte des Paging-Erfassungsparameters von 0 bis L-1 abgebildet werden; wenn ein Bitwert des ersten Informationsfeldes, das dem Paging-Erfassungsparameter der UE entspricht, 1 ist, überwacht die UE das den DCI zugeordneten PO; oder

wenn die CRC der DCI unter Verwendung der RNTI, die nicht P-RNTI ist, entschlüsselt wird, werden die Bits des ersten Informationsfeldes von höheren Bits zu niedrigeren Bits auf die Werte des Paging-Erfassungsparameters von 0 bis L-1 abgebildet; wenn der Bitwert des ersten Informationsfeldes, das dem Paging-Erfassungsparameter der UE entspricht, 1 ist, empfängt die UE die von den DCI geplante Paging-Nachricht.

11.  Basisstation, die umfasst: einen Arbeitsspeicher, einen Prozessor und ein in dem Arbeitsspeicher gespeichertes und auf dem Prozessor lauffähiges Computerprogramm; wobei der Prozessor bei der Ausführung des Computerprogramms dafür konfiguriert ist, das Verfahren nach einem der Ansprüche 1 bis 5 zu implementieren.

12.  Benutzervorrichtung, UE, die umfasst: einen Arbeitsspeicher, einen Prozessor und ein in dem Arbeitsspeicher gespeichertes und auf dem Prozessor lauffähiges Computerprogramm; wobei der Prozessor bei der Ausführung des Computerprogramms dafür konfiguriert ist, das Verfahren nach einem der Ansprüche 6 bis 10 zu implementieren.

13.  Computerlesbares Speichermedium, das in einer Basisstation enthalten ist und ein Computerprogramm zum Ausführen des Verfahrens nach einem der Ansprüche 1 bis 5 speichert.

14.  Computerlesbares Speichermedium, das in einer Benutzervorrichtung (UE) enthalten ist und ein Computerprogramm zum Ausführen des Verfahrens nach einem der Ansprüche 6 bis 10 speichert.

## Revendications

1.  Procédé d'indication de détection de radiomessagerie, réalisé par une station de base, comprenant :

la détermination (101) d'un équipement utilisateur, UE, qui doit surveiller une occasion de radiomessagerie, PO, ou recevoir un message de radiomessagerie ;

l'envoi (102) d'informations de commande de liaison descendante, DCI, porteuses d'un premier champ d'information à l'UE, et l'indication, au moyen d'une correspondance entre une valeur du premier champ d'information et un paramètre de détection de radiomessagerie de l'UE, du fait que l'UE doit surveiller une PO associée aux DCI ou recevoir un message de radiomessagerie planifié par les DCI ;

dans lequel le paramètre de détection de radiomessagerie est déterminé selon l'un ou une combinaison des paramètres suivants :

une identité d'UE, un nombre de trames de radiomessagerie, PF, dans un cycle de réception discontinue, DRX, un nombre de PO pour une PF, et une longueur du premier champ d'information,
**caractérisé en ce que** le paramètre de détection de radiomessagerie est égal au plancher [UE_ID/(N*Ns)] mod L, où UE_ID est l'identité d'UE, L est la longueur du premier champ d'information, N est le nombre de PF dans un cycle DRX, et Ns est le nombre de PO pour une PF.

2. Procédé selon la revendication 1, dans lequel l'identité d'UE est une identité d'abonné mobile temporaire 5G, 5G-S-TMSI, ou un reste de la 5G-S-TMSI divisée par 1024 ou 0.

3. Procédé selon la revendication 1, dans lequel l'indication, au moyen de la correspondance entre la valeur du premier champ d'information et le paramètre de détection de radiomessagerie de l'UE, du fait que l'UE doit surveiller la PO associée aux DCI ou recevoir le message de radiomessagerie planifié par les DCI comprend :
l'indication, à l'aide d'une table de bits dans le premier champ d'information, du paramètre de détection de radiomessagerie d'au moins un UE qui doit surveiller le PO associé aux DCI ou recevoir le message de radiomessagerie programmé par les DCI.

4. Procédé selon la revendication 1, comprenant en outre au moins l'un des éléments suivants :

le fait de porter un deuxième champ d'information indiquant que l'UE doit actualiser des informations système dans les DCI ; ou,
le fait de porter un troisième champ d'information indiquant que l'UE doit acquérir au moins les unes parmi des informations de système d'alerte aux tremblements de terre et aux tsunamis, ETWS, ou des informations de service d'alerte mobile commercial, CMAS, dans les DCI.

5. Procédé selon l'une quelconque des revendications 1 à 4, comprenant en outre :

le brouillage du contrôle de redondance cyclique, CRC, des DCI à l'aide d'une identité temporaire de réseau de radiomessagerie, P-RNTI ; ou,
le brouillage du CRC des DCI à l'aide d'une identité temporaire de réseau radio, RNTI, qui n'est pas P-RNTI ;
dans lequel, lorsque le CRC des DCI est brouillé à l'aide de la P-RNTI, des bits du premier champ d'information allant de bits supérieurs à des bits inférieurs sont mappés à des valeurs du paramètre de détection de radiomessagerie de 0 à L-1 ; si une valeur de bit à une position de bit dans le premier champ d'information est 1, l'UE ayant un paramètre de détection de radiomessagerie correspondant à la position de bit surveille la PO associée aux DCI ; ou
lorsque le CRC des DCI est brouillé à l'aide d'une RNTI, qui n'est pas P-RNTI, les bits du premier champ d'information allant de bits supérieurs à des bits inférieurs sont mappés aux valeurs du paramètre de détection de radiomessagerie de 0 à L-1 ; si une valeur de bit d'une position de bit dans le premier champ d'information est 1, l'UE ayant un paramètre de détection de radiomessagerie correspondant à la position de bit reçoit le message de radiomessagerie planifié par les DCI.

6. Procédé de détection de radiomessagerie, réalisé par un équipement utilisateur, UE, comprenant :

la réception (201), à partir d'une station de base, d'informations de commande de liaison descendante, DCI, porteuses d'un premier champ d'information ;
la détermination (202), selon une valeur du premier champ d'information correspondant à un paramètre de détection de radiomessagerie, de surveiller une occasion de radiomessagerie (PO) associée aux DCI ou de recevoir un message de radiomessagerie planifié par les DCI ;
dans lequel le paramètre de détection de radiomessagerie est déterminé selon l'un ou une combinaison des paramètres suivants :

une identité d'UE, un nombre de trames de radiomessagerie, PF, dans un cycle de réception discontinue, DRX, un nombre de PO pour une PF, et une longueur du premier champ d'information,
**caractérisé en ce que** le paramètre de détection de radiomessagerie est égal au plancher [UE_ID/(N*Ns)] mod L, où UE_ID est l'identité d'UE, L est la longueur du premier champ d'information, N est le nombre de PF dans un cycle DRX, et Ns est le nombre de PO pour une PF.

7. Procédé selon la revendication 6, dans lequel l'identité d'UE est une identité d'abonné mobile temporaire 5G, 5G-S-TMSI, un reste de la 5G-S-TMSI divisée par 1024, ou 0.

**8.** Procédé selon la revendication 6, dans lequel la détermination, selon la valeur du premier champ d'information correspondant au paramètre de détection de radiomessagerie, de surveiller la PO associée aux DCI ou de recevoir le message de radiomessagerie planifié par les DCI comprend :

la détermination, selon une table de bits dans le premier champ d'information, d'au moins un paramètre de détection de radiomessagerie, avec lequel au moins un UE doit surveiller la PO associée aux DCI ou recevoir le message de radiomessagerie planifié par les DCI.

**9.** Procédé selon la revendication 6, comprenant en outre au moins l'un des éléments suivants :

lorsqu'un deuxième champ d'information indiquant que l'UE doit actualiser des informations système est porté dans les DCI, l'acquisition des informations système selon l'indication ; et/ou,
lorsque le troisième champ d'information indiquant que l'UE doit acquérir au moins les unes parmi les informations ETWS ou les informations CMAS est porté dans les DCI, la réception du SIB6 ou du SIB7 ou du SIB8 selon l'indication, afin de recevoir au moins les unes parmi les informations ETWS ou les informations CMAS.

**10.** Procédé selon l'une quelconque des revendications 6 à 9, comprenant en outre :

le débrouillage du contrôle de redondance cyclique, CRC, des DCI à l'aide d'une identité temporaire de réseau de radiomessagerie, P-RNTI ; ou,
le débrouillage du CRC des DCI à l'aide d'une RNTI, qui n'est pas P-RNTI ;
dans lequel, lorsque le CRC des DCI est débrouillé à l'aide de la P-RNTI, les bits du premier champ d'information allant de bits supérieurs à des bits inférieurs sont mappés aux valeurs du paramètre de détection de radiomessagerie de 0 à L-1; si une valeur de bit du premier champ d'information correspondant au paramètre de détection de radiomessagerie de l'UE est 1, l'UE surveille la PO associée aux DCI ; ou
lorsque le CRC des DCI est débrouillé à l'aide de la RNTI, qui n'est pas P-RNTI, les bits du premier champ d'information allant de bits supérieurs à des bits inférieurs sont mappés aux valeurs du paramètre de détection de radiomessagerie de 0 à L-1; si la valeur de bit du premier champ d'information correspondant au paramètre de détection de radiomessagerie de l'UE est 1, l'UE reçoit le message de radiomessagerie planifié par les DCI.

**11.** Station de base comprenant : une mémoire, un processeur et un programme informatique stocké dans la mémoire et exécutable par le processeur ; dans lequel le processeur, lors de l'exécution du programme informatique, est configuré pour mettre en oeuvre le procédé de l'une quelconque des revendications 1 à 5.

**12.** Équipement utilisateur, UE, comprenant : une mémoire, un processeur et un programme informatique stocké dans la mémoire et exécutable par le processeur ; dans lequel le processeur, lors de l'exécution du programme informatique, est configuré pour mettre en oeuvre le procédé de l'une quelconque des revendications 6 à 10.

**13.** Support de stockage lisible par ordinateur compris dans une station de base, stockant un programme informatique pour l'exécution du procédé de l'une quelconque des revendications 1 à 5.

**14.** Support de stockage lisible par ordinateur compris dans un équipement utilisateur, UE, stockant un programme informatique pour l'exécution du procédé de l'une quelconque des revendications 6 à 10.

Determine a UE that needs to monitor a PO or receive a paging message    101

Send a DCI carrying a first information field to the UE, and indicate, by means of a correspondence between a value of the first information field and a paging detection parameter of the UE, that the UE needs to monitor the PO associated with the DCI or receive a paging message scheduled by the DCI    102

**FIG. 1**

Receive the DCI carrying the first information field    201

Determine, according to the value of the first information field corresponding to the paging detection parameter, whether to monitor the PO associated with the DCI or receive the paging message scheduled by the DCI    202

**FIG. 2**

~ 300

Processor

Bus interface

~ 310

Transceiver

~ 320

Memory

**FIG. 3**

~ 400

Processor

Bus interface

~ 420

Transceiver

~ 420

Memory

~ 430

User interface

**FIG. 4**

**EP 4 050 949 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018144873 A1